# EUROPEAN PATENT APPLICATION

(11) **EP 4 748 882 A1**
(43) Date of publication of application: **27.05.2026**
(21) Application number: 25203731.2
(22) Date of filing: 22.09.2025
(51) Int. Cl.: C08L 23/12

(54) **NON-HALOGENATED HIGHLY FLAME RETARDANT COMPOSITE THERMOPLASTIC RESIN COMPOSITIONS CONTAINING RECYCLED RESINS AND MOLDED ARTICLES MADE THEREFROM**

(30) Priority: 26.11.2024 KR 20240171489
(71) Applicant: Hanwha TotalEnergies Petrochemical Co., Ltd., Seosan-si, Chungcheongnam-do 31900 (KR)
(72) Inventor: Na, Yae Na, 31900 Seosan-si, Chungcheongnam-do (KR); Kim, Tae Young, 31900 Seosan-si, Chungcheongnam-do (KR); Lim, Hyoung Kyu, 31900 Seosan-si, Chungcheongnam-do (KR)
(74) Representative: Schön, Christoph

(57) **Abstract**

The present invention relates to non-halogenated highly flame retardant composite thermoplastic resin compositions containing recycled resins and molded articles made therefrom, and more specifically, to composite thermoplastic resin compositions which comprise a specific content of a propylene homopolymer or copolymer, a recycled polyolefin resin, a non-halogenated flame retardant, a dripping inhibitor, and an antioxidant, thereby securing excellent flame retardancy while being environmentally friendly, and molded articles made therefrom.

## Description

### [TECHNICAL FIELD]

The present invention relates to non-halogenated highly flame retardant composite thermoplastic resin compositions containing recycled resins and molded articles made therefrom, and more specifically, to composite thermoplastic resin compositions which comprise a specific content of a propylene homopolymer or copolymer, a recycled polyolefin resin, a non-halogenated flame retardant, a dripping inhibitor, and an antioxidant, thereby securing excellent flame retardancy while being environmentally friendly, and molded articles made therefrom.

### [BACKGROUND ART]

Polyolefins, which are a type of plastic, include polyethylene and polypropylene, and exist in various types depending on their molecular weight, density, chain form, and polymerization unit form. Polyolefins are being consumed in increasing amounts in numerous applications, including food and other products, fibers, automobile parts, and packaging for a wide variety of manufactured goods.

Recently, ESG (Environment, Social and Governance) has established itself as an essential corporate management system as a core theme of a sustainable circular economy. As part of this eco-friendly trend, consumer goods companies are increasingly expanding the proportion of recycled plastics used in order to realize a virtuous cycle for waste plastic resources.

In practice, a large amount of recycled plastic material currently arises mainly during the differential collection of urban plastic waste consisting of flexible packaging materials (cast films, blown films, and BOPP films), rigid packaging materials, blow-molded bottles, and injection-molded containers. Typically, through a separation step from other polymers such as PVC, PET, or PS, two major polyolefin fractions-polyethylene (particularly HDPE, LDPE, LLDPE) and polypropylene (homopolymers, random copolymers, heterogeneous copolymers)-are obtained.

When inorganic fillers such as glass fibers are used together with polyolefins, they provide advantages of excellent mechanical properties and weight reduction of parts, and thus are widely used in various fields. To reinforce flame retardancy in such plastic products, conventional methods have used halogen-based (Br-based, Cl-based, etc.) and halogen-antimony (Sb) composite flame retardants. However, while these provide excellent flame retardancy, they emit large amounts of toxic substances such as hydrogen bromide (HBr) and hydrogen chloride (HCl) during high-temperature processing and combustion, and under anaerobic conditions generate highly toxic carcinogens such as halogenated dioxins and furans, causing serious harm to human life, property, and the environment. In advanced countries where regulations on exhaust gases from plastic combustion are already in place, legal restrictions are being further tightened. In addition, conventional halogen-based and antimony-based plastic flame retardant cores generate a large amount of high gas-density irritating smoke during combustion, which necessitates the additional use of smoke suppressants and smoke inhibitors, thereby increasing manufacturing costs. They also release corrosive acids such as HBr and HCl during processing, imposing restrictions on processing conditions, and present a potential for more serious environmental problems when discarded plastics are incinerated.

Accordingly, as plastic products are being used in various fields in recent times, there is a demand for additional properties such as flame retardancy in addition to being environmentally friendly. However, plastic-related compositions satisfying all these requirements have not yet been provided.

### [CONTENTS OF THE INVENTION]

### [PROBLEMS TO BE SOLVED]

The purpose of the present invention is to provide a non-halogenated highly flame retardant composite thermoplastic resin compositions containing recycled resins and molded articles made therefrom, and more specifically, to composite thermoplastic resin compositions which comprise a specific content of a propylene homopolymer or copolymer, a recycled polyolefin resin, a non-halogenated flame retardant, a dripping inhibitor, and an antioxidant, thereby securing excellent flame retardancy while being environmentally friendly, and molded articles made therefrom.

### [TECHNICAL MEANS]

According to a first aspect of the present invention, there is provided a composite thermoplastic resin composition comprising, (A) 30 to 50 parts by weight of a propylene homopolymer or copolymer, (B) 5 to 50 parts by weight of a recycled polyolefin resin, and (C) 20 to 50 parts by weight of a non-halogenated flame retardant, based on 100 parts by weight of the total composition.

In one embodiment, the (A) propylene homopolymer or copolymer has a melt index (MI) measured at 230 °C in accordance with ASTM D 1238 of 0.5 to 40 g/min.

In one embodiment, the (B) recycled polyolefin resin is a recycled polyethylene resin, a recycled polypropylene resin or a combination thereof.

In one embodiment, the recycled polypropylene resin has a weight ratio of polypropylene to polyethylene of 65 to 100 : 0 to 35.

In one embodiment, the recycled polyolefin resin comprises 10 wt% or less of inorganic material based on 100 wt% of the recycled polyolefin resin, wherein the inorganic material is talc, calcium carbonate or a combination thereof.

In one embodiment, the (C) non-halogenated flame retardant is selected from the group consisting of piperazine pyrophosphate, melamine phosphate, melamine polyphosphate, melam pyrophosphate, melem pyrophosphate, melon pyrophosphate, melamine pyrophosphate, dimelamine pyrophosphate, melam polyphosphate, melon polyphosphate, melem polyphosphate, ammonium hydrogen phosphate, ammonium dihydrogen phosphate, ammonium polyphosphate and mixtures thereof.

In one embodiment, the composite thermoplastic resin composition of the present invention further comprises (D) 0.01 to 2 parts by weight of a dripping inhibitor, based on 100 parts by weight of the total composition.

In one embodiment, the (D) dripping inhibitor is a fluorine-based dripping inhibitor and is selected from the group consisting of polytetrafluoroethylene, polyvinylidene fluoride, polyhexafluoropropylene, sodium perfluoromethanesulfonate, potassium perfluoro-n-butanesulfonate, potassium perfluoro-t-butanesulfonate, sodium perfluorooctanesulfonate, calcium perfluoro-2-ethylhexanesulfonate and mixtures thereof.

In one embodiment, the composite thermoplastic resin composition of the present invention further comprises (E) 0.01 to 2 parts by weight of an antioxidant, based on 100 parts by weight of the total composition.

In one embodiment, the (E) antioxidant is selected from the group consisting of 2,6-di-t-butyl-4-methyl-phenol, pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, tris(2,4-di-t-butylphenyl)phosphite and mixtures thereof.

In one embodiment, the composite thermoplastic resin composition of the present invention further comprises an additive selected from the group consisting of a weather stabilizer, a compatibilizer, a release agent, a halogen absorbent, an impact modifier, a drop inhibitor, a surfactant, a lubricant, a nucleating agent, a UV stabilizer, a pigment, a dye and mixtures thereof.

According to a second aspect of the present invention, there is provided a molded article prepared by molding the above composite thermoplastic resin composition.

In one embodiment, the molded article of the present invention is an injection-molded article, an extrusion-molded article, a blow-molded article or a casting-molded article.

In one embodiment, the molded article of the present invention has a flame retardancy rating of UL94 5VA or higher (at a thickness of 1.5 mm).

### [EFFECT OF THE INVENTION]

According to the present invention, by using a composite thermoplastic resin composition comprising a specific content of a propylene homopolymer or copolymer, a recycled polyolefin resin, a non-halogenated flame retardant, a dripping inhibitor and an antioxidant, it is possible to obtain molded articles that are environmentally friendly and have excellent flame retardancy. The molded articles can be utilized in a wide variety of fields, such as food and other products, fibers, automobile parts and packaging for manufactured goods.

### [Brief Description of the Figures]

Fig. 1 is a graph showing the DSC analysis result of the (B1) PP recycled resin used in an Example of the present invention.
Fig. 2 is a graph showing the DSC analysis result of the (B2) PP recycled resin used in an Example of the present invention.
Fig. 3 is a graph showing the DSC analysis result of the (B3) PP recycled resin used in a Comparative Example of the present invention.

### [CONCRETE MODE FOR CARRYING OUT THE INVENTION]

The present invention is explained in more detail below.

The composite thermoplastic resin composition of the present invention comprises (A) 30 to 50 parts by weight of a propylene homopolymer or copolymer, (B) 5 to 50 parts by weight of a recycled polyolefin resin, and (C) 20 to 50 parts by weight of a non-halogenated flame retardant, based on 100 parts by weight of the total composition.

The composite thermoplastic resin composition of the present invention is environmentally friendly because it comprises a recycled polyolefin resin, that is, a post-consumer recycled (PCR) resin obtained by recycling products used and discarded by end consumers, and a non-halogenated flame retardant, and also secures excellent flame retardancy by comprising a specific content of a propylene homopolymer or copolymer, a dripping inhibitor and an antioxidant.

In one embodiment, the (A) propylene homopolymer or copolymer has a lower limit of melt index (MI) measured at 230 °C according to ASTM D 1238 of 0.5 g/min or more, 1 g/min or more, 2 g/min or more, 3 g/min or more, 4 g/min or more or 5 g/min or more, and an upper limit of 40 g/min or less, 35 g/min or less, 30 g/min or less, 25 g/min or less or 20 g/min or less, and may, for example, be 0.5 to 40 g/min, 1 to 35 g/min, 2 to 30 g/min, 3 to 25 g/min or 5 to 20 g/min.

When the melt index of the (A) propylene homopolymer or copolymer is less than the above range, there is a concern that the thin-film flame retardancy and flowability of the thermoplastic resin composition may deteriorate, and when it exceeds the above range, there is a concern that the thin-film flame retardancy of the thermoplastic resin composition may deteriorate.

The content of the (A) propylene homopolymer or copolymer, based on 100 parts by weight of the total composition, may be 30 parts by weight or more, 31 parts by weight or more, 32 parts by weight or more, 33 parts by weight or more or 34 parts by weight or more, and 50 parts by weight or less, 48 parts by weight or less, 46 parts by weight or less or 45 parts by weight or less, and may, for example, be 30 to 50 parts by weight, 31 to 48 parts by weight, 32 to 46 parts by weight or 34 to 45 parts by weight. When the content of the (A) propylene homopolymer or copolymer is less than the above range, there is a concern that the flowability and processability of the thermoplastic resin composition may deteriorate, and when it exceeds the above range, there is a concern that the thin-film flame retardancy of the thermoplastic resin composition may deteriorate.

The (B) recycled polyolefin resin may be a recycled polyethylene resin, a recycled polypropylene resin or a combination thereof, and, for example, recycled polypropylene resin may be used. Without being particularly limited, the recycled polyolefin resin may be obtained by compressing, crushing and washing waste polyolefin products derived from household recycled plastics or industrial recycled plastics, followed by melting and pelletizing. The (B) recycled polyolefin resin may comprise an inorganic material, and the upper limit of the inorganic material content, based on 100 wt% of the recycled polyolefin resin, may be 10 wt% or less, 8 wt% or less or 5 wt% or less, and the lower limit may be 0 wt% or more, 0.1 wt% or more or 0.5 wt% or more, and the content of the inorganic material may be 10 wt% or less, 0 to 8 wt% or less or 0 to 5 wt% or less. The inorganic material may comprise talc, calcium carbonate or a combination thereof.

The recycled polyethylene resin may have a weight ratio of polyethylene (PE) to polypropylene (PP) of 90 to 99.7:0.3 to 10, and the recycled polypropylene resin may have a weight ratio of polypropylene (PP) to polyethylene (PE) of 65 to 100:0 to 35, and may, for example, be 70 to 100:0 to 30, 72 to 100:0 to 28 or 75 to 100:0 to 25. For example, when the proportion of polyethylene resin in the recycled polypropylene resin is greater than the above range, the heat resistance and flame retardancy of the thermoplastic resin composition may deteriorate.

The content of the (B) recycled polyolefin resin, based on a total of 100 parts by weight of the composition, may be 5 parts by weight or more, 10 parts by weight or more, 15 parts by weight or more, 20 parts by weight or more, or 30 parts by weight or more, and may be 50 parts by weight or less, 48 parts by weight or less, 45 parts by weight or less, or 40 parts by weight or less. For example, it may be 5 to 50 parts by weight, 10 to 48 parts by weight, 15 to 45 parts by weight, or 30 to 40 parts by weight. When the content of the (B) recycled polyolefin resin exceeds the above range, there is a concern that the thin-film flame retardancy of the thermoplastic resin composition may deteriorate.

The (C) non-halogenated flame retardant may be selected from the group consisting of piperazine pyrophosphate, melamine phosphate, melamine polyphosphate, melam pyrophosphate, melem pyrophosphate, melon pyrophosphate, melamine pyrophosphate, dimelamine pyrophosphate, melam polyphosphate, melon polyphosphate, melem polyphosphate, ammonium hydrogen phosphate, ammonium dihydrogen phosphate, ammonium polyphosphate and mixtures thereof. For example, it may be a phosphorus-nitrogen-based flame retardant (ADEKA; FP-2200).

The content of the (C) non-halogenated flame retardant, based on a total of 100 parts by weight of the composition, may be 20 parts by weight or more, 22 parts by weight or more, 25 parts by weight or more, 28 parts by weight or more, 30 parts by weight or more or 32 parts by weight or more, and may be 50 parts by weight or less, 48 parts by weight or less, 45 parts by weight or less, or 40 parts by weight or less. For example, it may be 20 to 50 parts by weight, 22 to 48 parts by weight, 25 to 45 parts by weight or 32 to 40 parts by weight. When the content of the (C) non-halogenated flame retardant is less than the above range, flame retardancy may be poor, and when the content of the (C) non-halogenated flame retardant exceeds the above range, it is difficult to expect any additional effect.

The composite thermoplastic resin composition of the present invention may further comprise (D) 0.01 to 2 parts by weight of a dripping inhibitor, based on a total of 100 parts by weight of the composition.

The (D) dripping inhibitor is a fluorine-based dripping inhibitor and is selected from the group consisting of polytetrafluoroethylene, polyvinylidene fluoride, polyhexafluoropropylene, sodium perfluoromethanesulfonate, potassium perfluoro-n-butanesulfonate, potassium perfluoro-t-butanesulfonate, sodium perfluorooctanesulfonate, calcium perfluoro-2-ethylhexanesulfonate and mixtures thereof, for example, polytetrafluoroethylene.

The content of the (D) dripping inhibitor may be, based on a total of 100 parts by weight of the composition, 0.01 parts by weight or more, 0.05 parts by weight or more, 0.1 parts by weight or more, 0.12 parts by weight or more, 0.15 parts by weight or more or 0.18 parts by weight or more, and 2 parts by weight or less, 1.5 parts by weight or less, 1 part by weight or less, 0.8 parts by weight or less, or 0.4 parts by weight or less, for example, 0.01 to 2 parts by weight, 0.1 to 1 part by weight, 0.12 to 0.8 parts by weight or 0.15 to 0.4 parts by weight. When the content of the (D) dripping inhibitor is less than the above range, there is a risk that the thin-film flame retardancy of the thermoplastic resin composition may deteriorate, and when it exceeds the above range, there is also a risk that the thin-film flame retardancy of the thermoplastic resin composition may deteriorate.

The composite thermoplastic resin composition of the present invention may further comprise, based on a total of 100 parts by weight of the composition, (E) 0.01 to 2 parts by weight of an antioxidant.

The (E) antioxidant may be selected from the group consisting of 2,6-di-t-butyl-4-methyl-phenol, pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, tris(2,4-di-t-butylphenyl)phosphite and mixtures thereof, and may be, for example, 2,6-di-t-butyl-4-methyl-phenol.

The content of the (E) antioxidant may be, based on a total of 100 parts by weight of the composition, 0.01 parts by weight or more, 0.05 parts by weight or more, 0.1 parts by weight or more, 0.12 parts by weight or more, 0.15 parts by weight or more or 0.18 parts by weight or more, and 2 parts by weight or less, 1.5 parts by weight or less, 1 part by weight or less, 0.8 parts by weight or less or 0.4 parts by weight or less, for example, 0.01 to 2 parts by weight, 0.1 to 1 part by weight, 0.12 to 0.8 parts by weight or 0.15 to 0.4 parts by weight. If the content of the (E) antioxidant is less than the above range, there is a problem with oxidative stability during processing and storage of the product, and if it exceeds the above range, there is a problem of migration of the antioxidant to the product surface during long-term use.

In one embodiment, the composite thermoplastic resin composition of the present invention further comprises additives selected from the group consisting of a weather stabilizer, a compatibilizer, a release agent, a halogen absorbent, an impact modifier, a drop inhibitor, a surfactant, a lubricant, a nucleating agent, a UV stabilizer, a pigment, a dye and mixtures thereof. The content of the additives may be, based on a total of 100 parts by weight of the composition, 0.1 parts by weight or more, 0.5 parts by weight or more, 1 part by weight or more, 1.5 parts by weight or more or 1.8 parts by weight or more, and 5 parts by weight or less, 4 parts by weight or less, 3 parts by weight or less or 2.5 parts by weight or less, for example, 0.1 to 5 parts by weight, 0.5 to 4 parts by weight, 1 to 3 parts by weight or 1.5 to 2.5 parts by weight.

There is no particular limitation on the method for preparing the composite thermoplastic resin composition of the present invention, and methods for preparing composite resin compositions known in the technical field to which the present invention pertains can be used as is or appropriately modified. Specifically, for example, the above-mentioned components and additives in the required amounts can be introduced into a kneader such as a kneader, roll, or Banbury mixer, or a single-screw/twin-screw extruder, and then blended using these devices to prepare the composite thermoplastic resin composition of the present invention.

Preferably, the above-mentioned components and additives are melt-blended and pelletized in a twin-screw extruder at a temperature of 180 to 250°C.

The second aspect of the present invention relates to a molded article prepared by molding the above composite thermoplastic resin composition.

There is no particular limitation on the method for preparing a molded article from the composite thermoplastic resin composition according to an embodiment of the present invention, and methods known in the technical field to which the present invention pertains can be used. For example, the molded article of the present invention may be an injection-molded article, an extrusion-molded article, a blow-molded article, or a casting-molded article prepared by conventional methods such as injection molding, extrusion molding, blow molding or casting molding. For example, the molded article of the present invention may be an injection-molded article applied to household appliances such as refrigerators and washing machines, and high heat-resistant, highly flame-retardant products for automobiles.

In one embodiment, the molded article of the present invention may have a flame retardancy rating of UL94 5VA or higher (at a thickness of 1.5 mm).

The present invention is explained in more detail through the following Examples and Comparative Examples. However, the scope of the present invention is not limited thereby in any manner.

### [Examples]

The components in the contents (unit: parts by weight) shown in Table 1 below were melt-blended and pelletized in a twin-screw extruder at a temperature of 180 to 220°C, and then specimens for measuring mechanical properties, flame retardancy, and electrical properties were prepared using an injection molding machine (Engel, 180 tons). The injection conditions were maintained at a temperature of 210°C, pressure of 55 bar, speed of 30 mm/s, injection time of 6 seconds, cooling time of 40 seconds, and mold temperature of 55°C.

The properties of the prepared specimens are shown in Table 1.

**[Table 1]**

| **Composition (wt%)** | **Example 1** | **Example 2** | **Comparative Example 1** | **Comparative Example 2** | **Comparative Example 3** |
|---|---|---|---|---|---|
| (A) Polypropylene resin | 34.6 | 34.6 | 34.6 | 24.6 | 14.6 |
| (B1) PP recycled resin | 30 | | | 30 | 30 |
| (B2) PP recycled resin | | 30 | | | |
| (B3) PP recycled resin | | | 30 | | |
| (C) Non-halogenated flame retardant | 35 | 35 | 35 | 35 | 35 |
| (D) Dripping inhibitor | 0.2 | 0.2 | 0.2 | 0.2 | 0.2 |
| (E) Antioxidant | 0.2 | 0.2 | 0.2 | 0.2 | 0.2 |
| Talc | | | | 10 | 20 |
| MI (g/10min, 230°C) | 15 | 13 | 10 | 12 | 7 |
| Flame retardancy (1.5T V0) | PASS | PASS | PASS | PASS | FAIL |
| Flame retardancy (1.5T 5VA) | PASS | PASS | FAIL | FAIL | FAIL |

The components used are as follows:
- (A) Polypropylene resin: A propylene polymer with a melt index (MI) of 20 g/min measured at 230°C according to ASTM D 1238.
- (B1 to B3) PP (polypropylene) recycled resin: The Tm, PP/PE ratio, etc., of the PP recycled resins are shown in Table 2 below.

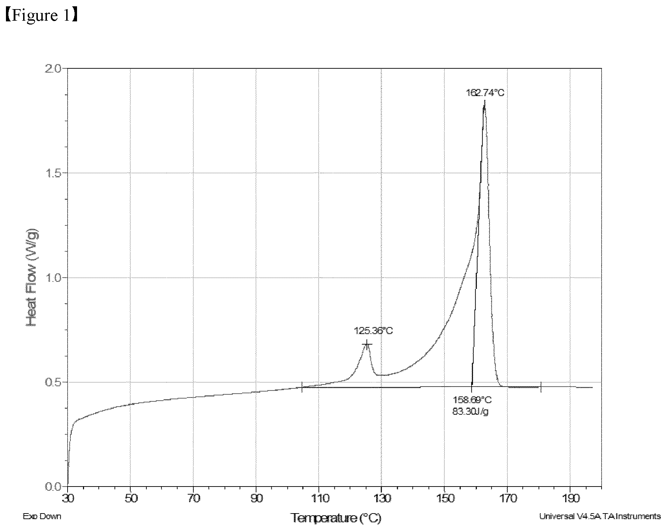

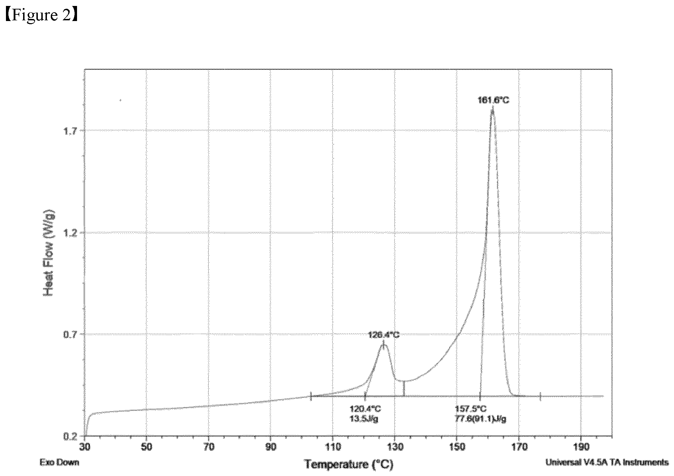

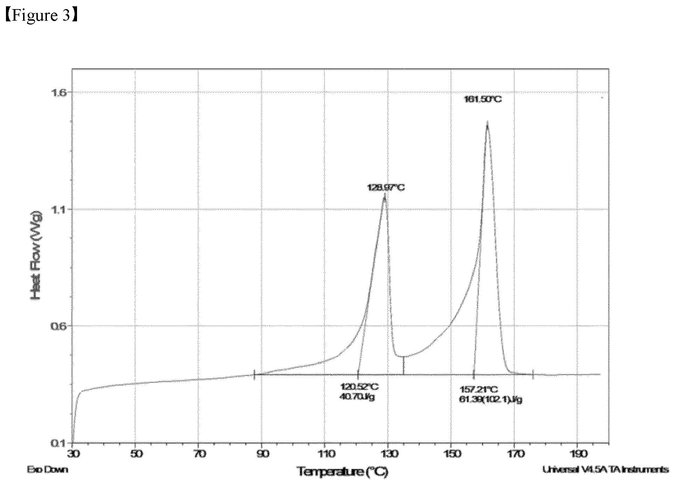

The DSC analysis results of PP recycled resins (B1) to (B3) are shown in Figs. 1 to 3, through which the PE/PP ratio in the recycled resins can be calculated.

**[Table 2]**

| | **Tm (Melting point, °C)** | **PE/PP ratio** | **Inorganic material content (wt%)** | **Note** |
|---|---|---|---|---|
| (B1) PP recycled resin | 125.4(PE), 158.7(PP) | 0.5/99.5 | 2.5 | Contains talc, CaCO₃ |
| (B2) PP recycled resin | 120.4(PE), 157.5(PP) | 13.5/77.5 | 2.3 | Contains talc, CaCO₃ |
| (B3) PP recycled resin | 129.0(PE), 161.5(PP) | 40.7/61.3 | 0.9 | Contains talc, CaCO₃ |

- (C) Non-halogenated flame retardant: Phosphorus-nitrogen-based flame retardant, ADEKA; FP-2200.
- (D) Dripping inhibitor: Polytetrafluoroethylene, PTFE.
- (E) Antioxidant: 2,6-di-t-butyl-4-methyl-phenol.
- Talc: Particle size 5 to 10 µm.

The properties were measured by the following methods:
- Melt index: Measured at 230°C under a 2.16 kg load according to ASTM D1238.
- Flame retardancy: Measured according to ASTM D3801 (UL94V) based on a specimen thickness of 1.5 mm, marked as PASS if the flame retardancy rating is satisfied, and FAIL if not satisfied.

As confirmed from the results in Table 1, Examples 1 and 2, which include the composite thermoplastic resin composition of the present invention, comprise a polypropylene recycled resin with a PP ratio of 65% or more in the recycled polyolefin and a non-halogenated flame retardant, and have a flame retardancy rating of UL94 5VA (based on a thickness of 1.5 mm), confirming that the composite thermoplastic resin composition and molded articles of the present invention are environmentally friendly and can secure excellent flame retardancy.

However, Comparative Example 1, which includes a polypropylene recycled resin with a PP ratio of less than 65% in the recycled polyolefin, showed inferior flame retardancy compared to Example 1, and Comparative Examples 2 and 3, although having a PP ratio of 65% or more in the recycled polyolefin, showed inferior flame retardancy compared to Example 1 due to the inclusion of talc, an inorganic filler.

## Claims

1. A composite thermoplastic resin composition comprising:
(A) 30 to 50 parts by weight of a propylene homopolymer or copolymer,
(B) 5 to 50 parts by weight of a recycled polyolefin resin, and
(C) 20 to 50 parts by weight of a non-halogenated flame retardant,
based on 100 parts by weight of the total composition.

2. The composite thermoplastic resin composition according to claim 1, wherein the (A) propylene homopolymer or copolymer has a melt index (MI) measured at 230°C according to ASTM D 1238 of 0.5 to 40 g/min.

3. The composite thermoplastic resin composition according to claim 1, wherein the (B) recycled polyolefin resin is a recycled polyethylene resin, a recycled polypropylene resin or a combination thereof.

4. The composite thermoplastic resin composition according to claim 3, wherein the recycled polypropylene resin has a weight ratio of polypropylene to polyethylene of 65 to 100 : 0 to 35.

5. The composite thermoplastic resin composition according to claim 1, wherein the recycled polyolefin resin comprises 10 wt% or less of inorganic materials based on 100 wt% of the recycled polyolefin resin, wherein the inorganic materials are talc, calcium carbonate or a combination thereof.

6. The composite thermoplastic resin composition according to claim 1, wherein the (C) non-halogenated flame retardant is selected from the group consisting of piperazine pyrophosphate, melamine phosphate, melamine polyphosphate, melam pyrophosphate, melem pyrophosphate, melon pyrophosphate, melamine pyrophosphate, dimelamine pyrophosphate, melam polyphosphate, melon polyphosphate, melem polyphosphate, ammonium hydrogen phosphate, ammonium dihydrogen phosphate, ammonium polyphosphate and mixtures thereof.

7. The composite thermoplastic resin composition according to claim 1, further comprising (D) 0.01 to 2 parts by weight of a dripping inhibitor, based on 100 parts by weight of the total composition.

8. The composite thermoplastic resin composition according to claim 7, wherein the (D) dripping inhibitor is a fluorine-based dripping inhibitor and is selected from the group consisting of polytetrafluoroethylene, polyvinylidene fluoride, polyhexafluoropropylene, sodium perfluoromethanesulfonate, potassium perfluoro-n-butanesulfonate, potassium perfluoro-t-butanesulfonate, sodium perfluorooctanesulfonate, calcium perfluoro-2-ethylhexanesulfonate and mixtures thereof.

9. The composite thermoplastic resin composition according to claim 1, further comprising (E) 0.01 to 2 parts by weight of an antioxidant, based on 100 parts by weight of the total composition.

10. The composite thermoplastic resin composition according to claim 9, wherein the (E) antioxidant is selected from the group consisting of 2,6-di-t-butyl-4-methyl-phenol, pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, tris(2,4-di-t-butylphenyl)phosphite and mixtures thereof.

11. The composite thermoplastic resin composition according to claim 1, further comprising an additive selected from the group consisting of a weather stabilizer, a compatibilizer, a release agent, a halogen absorbent, an impact modifier, a drop inhibitor, a surfactant, a lubricant, a nucleating agent, a UV stabilizer, a pigment, a dye and mixtures thereof.

12. A molded article prepared by molding the composite thermoplastic resin composition according to any one of claims 1 to 11.

13. The molded article according to claim 12, wherein the molded article is an injection-molded article, an extrusion-molded article, a blow-molded article or a casting-molded article.

14. The molded article according to claim 12, wherein the molded article has a flame retardancy rating of UL94 5VA (at a thickness of 1.5 mm).
